# EUROPÄISCHE PATENTSCHRIFT

(11) **EP 3 292 596 B1**
(45) Veröffentlichungstag und Bekanntmachung des Hinweises auf die Patenterteilung: **21.08.2019**
(21) Anmeldenummer: 16722842.8
(22) Anmeldetag: 04.05.2016
(51) Int. Cl.: H01R 43/02, H01R 9/05, H01R 4/02, G01K 13/12, B23K 1/002, B23K 3/08

(54) **VERFAHREN ZUM HERSTELLEN EINER LÖTVERBINDUNG, ELEKTRISCHER STECKVERBINDER ZUM VERLÖTEN MIT EINEM KOAXIALKABEL UND VERWENDUNG EINES SOLCHEN STECKVERBINDERS**
METHOD FOR PRODUCING A SOLDERED CONNECTION, ELECTRICAL PLUG-IN CONNECTOR FOR SOLDERING TO A COAXIAL CABLE AND USE OF SUCH A PLUG-IN CONNECTOR
PROCÉDÉ DE FABRICATION D'UNE LIAISON BRASÉE, CONNECTEUR ÉLECTRIQUE ENFICHABLE POUR LE BRASAGE SUR UN CÂBLE COAXIAL ET UTILISATION D'UN TEL CONNECTEUR ENFICHABLE

(30) Priorität: 07.05.2015 DE 102015107180
(43) Veröffentlichungstag der Anmeldung: 14.03.2018
(73) Patentinhaber: TELEGÄRTNER KARL GÄRTNER GMBH, 71144 Steinenbronn (DE)
(72) Erfinder: VOGL, Manfred, 71394 Kernen im Remstal (DE)
(74) Vertreter: Hoeger, Stellrecht & Partner Patentanwälte mbB
(86) Internationale Anmeldenummer: PCT/EP2016/060080
(87) Internationale Veröffentlichungsnummer: WO 2016/177825

(56) Entgegenhaltungen:
- WO-A1-92/17923
- DE-A1-102008 046 330
- US-A- 5 281 167
- US-A1- 2013 186 941

## Beschreibung

Die Erfindung betrifft ein Verfahren zum Herstellen einer Lötverbindung zwischen mindestens zwei Bauteilen, bei dem die Bauteile zum Schmelzen eines Lotes in einem Lötbereich erwärmt werden, wobei die Erwärmung des Lötbereichs und/oder die Zufuhr von Lot zum Lötbereich in Abhängigkeit von der Temperatur erfolgt, die durch berührungsloses Erfassen einer von mindestens einer Temperaturmessfläche eines der Bauteile emittierten Wärmestrahlung ermittelt wird.

Außerdem betrifft die Erfindung einen elektrischen Steckverbinder zum Verlöten mit einem Koaxialkabel, wobei der Steckverbinder einen Lötbereich aufweist zum Herstellen einer Lötverbindung gemäß dem voranstehend genannten Verfahren.

Darüber hinaus betrifft die Erfindung die Verwendung eines derartigen elektrischen Steckverbinders.

Lötverbindungen ermöglichen es, mindestens zwei Bauteile elektrisch und mechanisch miteinander zu verbinden. Die miteinander zu verbindenden Bauteile werden aneinandergefügt und anschließend wird ein Lötbereich der Bauteile erwärmt, so dass ein im Lötbereich angeordnetes Lot schmilzt und die Bauteile in ihrem Verbindungsbereich benetzt. Die Erwärmung des Lötbereichs kann beispielsweise mit Hilfe einer Induktionsspule erfolgen, die den Lötbereich umgibt. Um einerseits sicherzustellen, dass der Lötbereich eine ausreichende Erwärmung aufweist, so dass das daran angeordnete Lot schmilzt und die Bauteile benetzt, um aber andererseits eine unzulässig hohe Erwärmung und damit eine möglicherweise einhergehende Beschädigung der Bauteile zu vermeiden, erfolgt die Erwärmung häufig in Abhängigkeit von einer Temperatur, die berührungslos ermittelt wird. Zur Temperaturermittlung wird die von mindestens einer Temperaturmessfläche eines der Bauteile emittierte Wärmestrahlung erfasst. Die Wärmestrahlung kann beispielsweise mit Hilfe eines Pyrometers erfasst werden.

Das Dokument WO 92/17923 A1 offenbart ein Verfahren zum Herstellen einer elektrisch leitenden Verbindung zwischen einem Bauteil und einem Leiter, wobei das Bauteil ein schmelzbares Material und ein ferromagnetisches Material aufweist. Das ferromagnetische Material weist eine Curie-Temperatur auf und wird induktiv auf die Curie-Temperatur erwärmt, so dass das schmelzbare Material schmilzt.

Aus dem Dokument DE 10 2008 046 330 A1 ist ein Verfahren zum Herstellen einer Lötverbindung zwischen einer Solarzelle und einem Kontaktdraht bekannt, bei dem ein metallisierter Kontaktbereich der Solarzelle zum Schmelzen eines Lotes erwärmt wird, wobei die Erwärmung des Lötbereichs in Abhängigkeit von einer Temperatur erfolgt, die durch berührungsloses Erfassen einer von einer Temperaturmessfläche des Lötbereichs emittierten Wärmestrahlung ermittelt wird.

Die von der mindestens einen Temperaturmessfläche emittierte Wärmestrahlung ist vom Emissionsgrad der Temperaturmessfläche abhängig. Der Emissionsgrad der Temperaturmessfläche ist unter anderem von deren Oberflächenbeschaffenheit abhängig, insbesondere von deren Reflexionsgrad. Stark reflektierende Flächen, insbesondere stark reflektierende Metallflächen, weisen einen eher geringen Emissionsgrad auf. Dieser geringe Emissionsgrad erschwert die prozesssichere, schnell erfassbare und reproduzierbare Temperaturermittlung.

Um den Emissionsgrad einer Temperaturmessfläche zu erhöhen, wurde bereits vorgeschlagen, die Temperaturmessfläche vor dem eigentlichen Lötprozess mit einem Lack zu beschichten, der einen hohen Emissionsgrad aufweist. Die Beschichtung mit einem Lack hat allerdings den Nachteil, dass der Lack anschließend trocknen muss und daher Trockenzeiten zu beachten sind. Darüber hinaus entstehen bei der Beschichtung mit Lack Lösungsmitteldämpfe, die abgesaugt werden müssen, um eine Gesundheitsgefährdung zu vermeiden. Häufig breitet sich der Lack auf der Temperaturmessfläche unkontrolliert aus, da er je nach Geometrie der Temperaturmessfläche nur schwer vorhersehbaren Adhäsions- und Kohäsionskräften unterliegt. Die Lackbeschichtung weist daher häufig eine uneinheitliche Dicke und deshalb auch eine uneinheitliche Emission von Wärmestrahlung auf. Außerdem wird die Temperaturmessfläche in manchen Fällen nur unvollständig mit Lack benetzt.

Der Einsatz eines Lacks zur Erhöhung des Emissionsgrads der Temperaturmessfläche hat darüber hinaus den Nachteil, dass der Lack die elektrischen Eigenschaften der miteinander verbundenen Bauteile beeinträchtigen kann. Dies gilt insbesondere bei der Herstellung einer Lötverbindung zwischen elektrischen Bauteilen, über die hochfrequente elektrische Signale übertragen werden sollen. Die Beschichtung der Temperaturmessfläche mit einem Lack kann hierbei die passive Intermodulation der Bauteile verschlechtern. Unter einer passiven Intermodulation wird die gegenseitige Beeinträchtigung elektrischer Signale verstanden, die mit unterschiedlichen Frequenzen über die Bauteile übertragen werden. Die passive Intermodulation wird unter anderem von den Bestandteilen des auf die Temperaturmessfläche aufgebrachten Lacks beeinflusst.

Alternativ zum Aufbringen eines Lacks auf eine Temperaturmessfläche wurde auch schon vorgeschlagen, zur Erhöhung des Emissionsgrads eine dünne Schicht auf die Temperaturmessfläche aufzukleben. Eine derartige Vorgehensweise ist allerdings nur bei leicht zugänglichen Temperaturmessflächen möglich und hat darüber hinaus den Nachteil, dass der zum Einsatz kommende Klebstoff, mit dem die dünne Schicht auf die Temperaturmessfläche aufgeklebt wird, die elektrischen Eigenschaften der Bauteile beeinträchtigten kann, insbesondere die passive Intermodulation. Außerdem ist aus niederfrequenten Anwendungen bekannt, dass Klebstoff mit uneinheitlichen Temperaturleitfähigkeiten zu einer weiteren Erhöhung der Messunsicherheit beiträgt.

Aufgabe der vorliegenden Erfindung ist es daher, ein Verfahren der eingangs genannten Art derart weiterzubilden, dass der Emissionsgrad der mindestens einen Temperaturmessfläche prozesssicher und mit allenfalls geringfügiger Beeinträchtigung der elektrischen Bauteile erhöht werden kann.

Diese Aufgabe wird durch ein Verfahren mit den Merkmalen von Patentanspruch 1 gelöst.

Die lokale Erwärmung der mindestens einen Temperaturmessfläche hat eine Veränderung von deren Oberflächenstruktur zur Folge. Es hat sich gezeigt, dass dadurch der Emissionsgrad der mindestens einen Temperaturmessfläche erhöht werden kann, ohne dass die mindestens eine Temperaturmessfläche mit einem zusätzlichen Material beschichtet oder beklebt werden muss.

Die Erfassung der Wärmestrahlung, die von mehreren Temperaturmessflächen emittiert wird, hat den Vorteil, dass die Temperatur des Lötbereichs genauer und mit größerer Prozesssicherheit ermittelt werden kann. Außerdem lassen sich aus der Differenz der Emissionsmessungen verschiedener Temperaturmessflächen zusätzliche Informationen gewinnen.

Bevorzugt wird die mindestens eine Temperaturmessfläche durch die gezielte Erwärmung an ihrer Oberfläche beispielsweise oxidiert. Die Oxidation hat eine dunkle Verfärbung der Oberfläche zur Folge, durch die der Emissionsgrad der mindestens einen Temperaturmessfläche deutlich erhöht wird.

Besonders günstig ist es, wenn eine dünne, stark reflektierende Oberflächenschicht der mindestens einen Temperaturmessfläche durch die lokale Erwärmung verdampft, das heißt abgetragen wird. Die Dicke der durch die Erwärmung verdampften Oberflächenschicht kann wenige Mikrometer betragen, beispielsweise maximal 5 bis 10 Mikrometer, insbesondere 2 bis 5 Mikrometer.

Das Verdampfen einer dünnen Oberflächenschicht der mindestens einen Temperaturmessfläche ist insbesondere dann von Vorteil, wenn die Temperaturmessfläche im Bereich einer galvanischen Beschichtung eines der Bauteile angeordnet ist. Die galvanische Beschichtung kann eine Dicke von wenigen Mikrometern aufweisen und durch die Wärmebehandlung der mindestens einen Temperaturmessfläche kann diese dünne galvanische Beschichtung abgetragen werden. Eine unter der galvanischen Beschichtung angeordnete Materialschicht kann gleichzeitig oxidiert werden.

In Fällen, in denen das die mindestens eine Temperaturmessfläche aufweisende Bauteil eine stark reflektierende galvanische Beschichtung und eine unterhalb der galvanischen Beschichtung angeordnete, durch Wärmebeaufschlagung oxidierbare und sich dadurch dunkel verfärbende Materialschicht aufweist, kann durch das thermische Abtragen der galvanischen Beschichtung und durch die Oxidation einer darunter angeordneten Materialschicht ein besonders hoher Emissionsgrad erzielt werden, ohne dass dadurch die elektrischen Eigenschaften der Bauteile merklich beeinträchtigt werden. Insbesondere hat eine Wärmebehandlung der mindestens einen Temperaturmessfläche keine merkliche Verschlechterung der passiven Intermodulation zur Folge, obwohl die Oberflächenstruktur gezielt lokal verändert wird.

Es kann vorgesehen sein, dass die mindestens eine Temperaturmessfläche zur Erhöhung ihres Emissionsgrads unmittelbar vor Beginn der Temperaturerfassung lokal erwärmt wird. Es kann allerdings auch vorgesehen sein, dass die lokale Erwärmung der mindestens einen Temperaturmessfläche in einem zeitlichen Abstand vor dem Beginn der Erfassung der von der Temperaturmessfläche emittierten Wärmestrahlung erfolgt.

Beispielsweise kann die lokale Erwärmung der mindestens einen Temperaturmessfläche erfolgen, noch bevor die miteinander zu verbindenden Teile zusammengefügt werden.

Insbesondere kann vorgesehen sein, dass zumindest eines der miteinander zu verlötenden Bauteile zumindest in seinem Lötbereich beschichtet wird, und dass in einem späteren Verfahrensschritt mindestens eine Temperaturmessfläche, die im Bereich der Beschichtung angeordnet ist, lokal erwärmt wird zur Erhöhung ihres Emissionsgrads, und dass erst in einem nachfolgenden Schritt das Bauteil mit mindestens einem weiteren Bauteil zusammengefügt wird, um anschließend mit dem mindestens einen weiteren Bauteil temperaturgeregelt verlötet zu werden.

Das die mindestens eine Temperaturmessfläche aufweisende Bauteil kann nach der lokalen Erwärmung der Temperaturmessfläche als Schüttware weiterverarbeitet werden. Die Temperaturmessfläche wird nach ihrer lokalen Erwärmung durch nachfolgende Verarbeitungsschritte des Bauteils nicht beschädigt, so dass die von ihr emittierte Wärmestrahlung zur temperaturgeregelten Herstellung einer Lötverbindung in einem später erfolgenden Lötprozess von einem Temperatursensor, dessen Funktionsweise auf emittierter Wärmestrahlung beruht, erfasst werden kann.

Die zur Erhöhung ihres Emissionsgrads erfolgende lokale Wärmebehandlung der mindestens einen Temperaturmessfläche kann beispielsweise dadurch erfolgen, dass die Temperaturmessfläche mit Laserstrahlung beaufschlagt wird. Die Beaufschlagung mit Laserstrahlung hat den Vorteil, dass auch schwer zugängliche und/oder unebene, beispielsweise gewölbte Temperaturmessflächen auf einfache Weise lokal erwärmt werden können.

Die Beaufschlagung der mindestens einen Temperaturmessfläche mit Laserstrahlung hat darüber hinaus den Vorteil, dass zumindest ein Teilbereich einer oder mehrerer Temperaturmessflächen kurzzeitig mit verhältnismäßig hoher Energie beaufschlagt werden kann, so dass ein am Lötbereich angeordnetes Lotformteil lokal verflüssigt und bei anschließendem Erkalten am Bauteil fixiert wird.

Mindestens eine Temperaturmessfläche kann auch als Informationsträger dienen, um beispielsweise die Artikelnummer und/oder das Herstelldatum des Bauteils und/oder sonstige Informationen anzuzeigen. Die Anzeige kann insbesondere in codierter Form erfolgen, beispielsweise als Barcode oder Matrix-Code. Es kann beispielsweise vorgesehen sein, dass eine Temperaturmessfläche einen QR-Code ("quick response code") aufweist.

Wie bereits erwähnt, kann die zur Erhöhung des Emissionsgrades erfolgende lokale Erwärmung der mindestens einen Temperaturmessfläche durch Beaufschlagen der Temperaturmessfläche mit Laserstrahlung erfolgen. Dies gibt die Möglichkeit, mittels der Laserstrahlung auch die erläuterten Informationen darzustellen, vorzugsweise in codierter Form. Hierzu kann mittels der Laserstrahlung beispielsweise ein Muster, insbesondere ein Barcode oder Matrix-Code, QR-Code, auf der Temperaturmessfläche erzeugt werden, und das Muster kann zu einem späteren Zeitpunkt berührungslos, zum Beispiel optisch, oder berührungsbehaftet erfasst werden.

Die Leistung der die Laserstrahlung bereitstellenden Laserstrahlungsquelle beträgt vorzugsweise maximal 20 Watt. Insbesondere eine Leistung von 5 bis 15 Watt, beispielsweise 10 Watt, hat sich als vorteilhaft erwiesen.

Die mindestens eine Temperaturmessfläche wird bei einer vorteilhaften Ausführungsform des erfindungsgemäßen Verfahrens zur Erhöhung ihres Emissionsgrads bis zu 5 Sekunden mit Laserstrahlung beaufschlagt. Insbesondere eine Laserbeaufschlagung für eine Zeitdauer von 1 bis 2 Sekunden hat sich als vorteilhaft erwiesen.

Die die Laserstrahlung bereitstellende Laserstrahlungsquelle ist günstigerweise ein Festkörperlaser, insbesondere ein Faserlaser.

Die in Abhängigkeit von der berührungslos erfassten Temperatur der mindestens einen Temperaturmessfläche erfolgende Erwärmung des Lötbereichs der miteinander zu verbindenden Bauteile erfolgt vorteilhafterweise mittels einer Induktionsspule, die an ein Energieversorgungsgerät angeschlossen ist, das in Abhängigkeit von der berührungslos erfassten Temperatur der Temperaturmessfläche steuerbar ist. Die Induktionsspule kann den Lötbereich der miteinander zu verlötenden Bauteile in Umfangsrichtung umgeben. Die Zufuhr von Energie zur Induktionsspule erfolgt in Abhängigkeit von der Temperatur der Temperaturmessfläche. Da deren Emissionsgrad in einem früheren Verfahrensschritt durch lokale Erwärmung erhöht wurde, lässt sich die Temperatur prozesssicher, schnell und reproduzierbar ermitteln und die Energieversorgung der Induktionsspule lässt sich zuverlässig in Abhängigkeit von der Temperatur regeln.

Die miteinander zu verbindenden Bauteile können beispielsweise ein elektrischer Steckverbinder und ein elektrisches Kabel sein. Die Lötverbindung zwischen dem elektrischen Steckverbinder und dem Kabel kann praktisch ohne Beeinträchtigung der passiven Intermodulation erfolgen und innerhalb sehr kurzer Zeit durchgeführt werden.

Die Erfindung betrifft auch einen elektrischen Steckverbinder zur Herstellung einer Lötverbindung mit einem Koaxialkabel, wobei die Lötverbindung nach einem voranstehend genannten Verfahren hergestellt wird.

Der erfindungsgemäße elektrische Steckverbinder weist einen Lötbereich auf zum Herstellen der Lötverbindung mit einem Außenleiter des Koaxialkabels. Der elektrische Steckverbinder weist für eine berührungslose Temperaturerfassung mindestens eine Temperaturmessfläche auf mit einer durch lokale Wärmebehandlung veränderten Oberflächenstruktur.

Wie bereits erwähnt, wird durch die lokale Wärmebehandlung der mindestens einen Temperaturmessfläche deren Emissionsgrad erhöht und dies wiederum ermöglicht eine prozesssichere, schnelle und reproduzierbare Ermittlung der Temperatur der Temperaturmessfläche, auf deren Grundlage die Lötverbindung zwischen dem elektrischen Steckverbinder und dem Koaxialkabel hergestellt werden kann, ohne dass dadurch die Übertragung elektrischer Signale vom Koaxialkabel zum elektrischen Steckverbinder beeinträchtigt wird.

Die mindestens eine Temperaturmessfläche des Steckverbinders ist durch die lokale Wärmebehandlung günstigerweise oxidiert.

Alternativ oder ergänzend kann vorgesehen sein, dass eine Oberflächenschicht der mindestens einen Temperaturmessfläche durch die lokale Erwärmung verdampft ist. Die Dicke der Oberflächenschicht kann wenige Mikrometer betragen, beispielsweise maximal 5 bis 10 Mikrometer.

Von besonderem Vorteil ist es, wenn der erfindungsgemäße elektrische Steckverbinder zumindest einen Kabelanschlussabschnitt zur Aufnahme eines Endabschnitts des Koaxialkabels aufweist, wobei der Kabelanschlussabschnitt eine galvanische Beschichtung trägt und die mindestens eine Temperaturmessfläche am Kabelanschlussabschnitt angeordnet und oberflächlich thermisch abgetragen ist. Der Kabelanschlussabschnitt kann beispielsweise eine galvanische Beschichtung unter Einsatz von Silber aufweisen und einen Kern aus einem Kupfermaterial, wobei im Bereich der mindestens einen Temperaturmessfläche die galvanische Silberschicht thermisch abgetragen ist und das unter der galvanischen Silberschicht angeordnete Kupfermaterial im Bereich der Temperaturmessfläche oxidiert ist, wobei es durch Oxidation dunkel verfärbt ist. Die galvanische Beschichtung führt zu einem hohen Reflexionsgrad des Steckverbinders im Kabelanschlussabschnitt. Die Abtragung der galvanischen Beschichtung und die Oxidation des darunter liegenden Materials im Bereich der Temperaturmessfläche stellen sicher, dass die Temperatur der Temperaturmessfläche prozesssicher, schnell und reproduzierbar ermittelt werden kann zur Regelung des Lötprozesses, bei dem die Erwärmung des Kabelanschlussabschnitts in Abhängigkeit von der Temperatur der Temperaturmessfläche erfolgt.

Alternativ oder ergänzend zur temperaturabhängigen Erwärmung des Lötbereichs kann zum Herstellen einer Lötverbindung zwischen mindestens zwei Bauteilen auch die Zufuhr von Lot zum Lötbereich in Abhängigkeit von der berührungslos erfassten Temperatur der mindestens einen Temperaturmessfläche erfolgen. Der Lötbereich kann erwärmt werden, so dass das zugeführte Lot schmilzt, wobei die Geschwindigkeit der Lotzuführung in Abhängigkeit von der erfassten Temperatur des Temperaturmessbereichs erfolgt. Die Zufuhr von Lot erfolgt hierbei mit einer größeren Geschwindigkeit, wenn die erfasste Temperatur einen vorgegebenen Maximalwert überschreitet, und die Zufuhr von Lot erfolgt mit geringerer Geschwindigkeit, wenn die erfasste Temperatur einen vorgegebenen Minimalwert unterschreitet. Die Zufuhr von Lot kann somit auf konstruktiv einfache und prozesssichere Art und Weise an das Aufschmelz- und Benetzungsverhalten des zugeführten Lotes angepasst werden.

Der erfindungsgemäße Steckverbinder eignet sich insbesondere zur Verwendung im Mobilfunkbereich, das heißt zur Übertragung elektrischer Signale mit einer Frequenz von mindestens 500 MHz, insbesondere 500 MHz bis 3 GHz.

Der Steckverbinder kann mit dem voranstehend erläuterten Verfahren mit einem Koaxialkabel elektrisch und mechanisch verbunden werden, um elektrische Signale bevorzugt in einem Frequenzbereich von 0,5 GHz bis 3 GHz mit sehr geringer passiver Intermodulation zu übertragen.

Die nachfolgende Beschreibung einer vorteilhaften Ausführungsform der Erfindung dient im Zusammenhang mit der Zeichnung der näheren Erläuterung. Es zeigen:

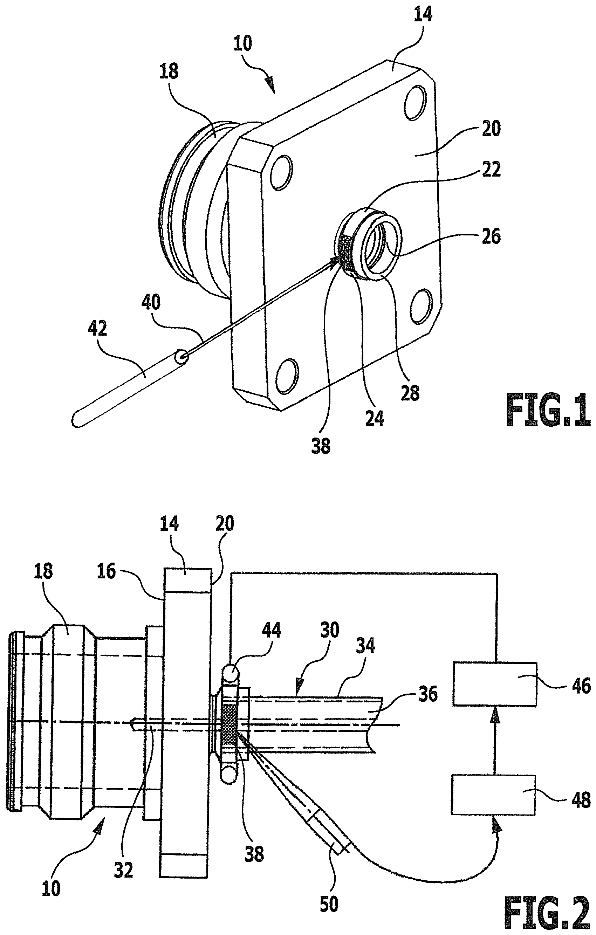

- Figur 1:: eine perspektivische Darstellung eines Bauteils in Form eines elektrischen Steckverbinders, in dessen Lötbereich eine Temperaturmessfläche mit erhöhtem Emissionsgrad für Wärmestrahlung erzeugt wird;
- Figur 2:: eine schematische Darstellung eines temperaturgeregelten Lötprozesses zur Herstellung einer Lötverbindung zwischen dem Steckverbinder aus Figur 1 und einem Koaxialkabel.

In der Zeichnung sind schematisch ein elektrischer Steckverbinder 10 und ein Koaxialkabel 30 dargestellt, die mittels einer Lötverbindung elektrisch und mechanisch miteinander verbunden werden und sich insbesondere zur Verwendung im Mobilfunkbereich eignen. Der elektrische Steckverbinder 10 weist im dargestellten Ausführungsbeispiel einen Flansch 14 auf, der beispielsweise mit einem in der Zeichnung zur Erzielung einer besseren Übersicht nicht dargestellten Gehäuse einer elektrischen Baugruppe verschraubt werden kann.

An eine Vorderseite 16 des Flanschs 14 schließt sich eine hülsenförmige Buchse 18 an, in die ein Stecker eines in der Zeichnung nicht dargestellten, an sich bekannten komplementär ausgebildeten elektrischen Steckverbinders eingeführt werden kann. An die der Vorderseite 16 abgewandte Rückseite 20 des Flanschs 14 schließt sich ein hülsenartiger Kabelanschlussabschnitt 22 an, der einen Lötbereich 24 des elektrischen Steckverbinders 10 ausbildet und in den ein ringförmiges Lotformteil 26 eingesetzt ist, wobei das Lotformteil 26 mit einem der Rückseite 20 abgewandten Endabschnitt 28 aus dem Kabelanschlussabschnitt 22 herausragt.

Der elektrische Steckverbinder 10 trägt eine galvanische Beschichtung aus Silber, die dem elektrischen Steckverbinder 10 einen hohen Reflexionsgrad verleiht. Dies verbessert die elektrischen Abschirmeigenschaften des elektrischen Steckverbinders 10.

Der hohe Reflexionsgrad hat allerdings zur Folge, dass der elektrische Steckverbinder 10 nur einen geringen Emissionsgrad für Wärmestrahlung aufweist.

Der Kabelanschlussabschnitt 22 nimmt einen Endabschnitt eines Koaxialkabels 30 auf, das in üblicher Weise einen Innenleiter 32 und einen Außenleiter 34 aufweist, zwischen denen ein Dielektrikum 36 angeordnet ist. Der Außenleiter 34 wird in der nachfolgend noch näher erläuterten Weise mit dem Kabelanschlussabschnitt 22 verlötet und der Innenleiter 32 taucht in die Buchse 18 ein.

Noch bevor das Koaxialkabel 30 in den Kabelanschlussabschnitt 22 eingeführt wird, wird an der Außenseite des Kabelanschlussabschnitts 22 mindestens eine Temperaturmessfläche 38 erzeugt, die einen hohen Emissionsgrad für Wärmestrahlung aufweist. Hierzu wird der Kabelanschlussabschnitt 22 in einem sich nur über einen Teilbereich von dessen Umfang erstreckenden Bereich durch Beaufschlagen mit einer Laserstrahlung 40 lokal erwärmt. Die Laserstrahlung 40 wird von einem Festkörperlaser, im dargestellten Ausführungsbeispiel von einem Faserlaser 42 bereitgestellt. Die Temperaturmessfläche 38 wird mittels der etwa 1 bis 2 Sekunden auf die Temperaturmessfläche 38 einwirkenden Laserstrahlung so weit erwärmt, dass sich deren Oberflächenstruktur verändert, indem die eine Dicke von einigen Mikrometern, insbesondere 2 bis 5 Mikrometer, aufweisende galvanische Beschichtung des Kabelanschlussabschnitts 22 im Bereich der Temperaturmessfläche 38 verdampft und das darunterliegende Kupfermaterial oxidiert wird. Die Oxidation des Kupfermaterials führt zu einer dunklen Verfärbung und hat zur Folge, dass die Temperaturmessfläche 38 im Gegensatz zum restlichen Bereich des Kabelanschlussabschnitts 22 einen hohen Emissionsgrad für Wärmestrahlung aufweist.

Die Leistung des Faserlasers beträgt im dargestellten Ausführungsbeispiel etwa 10 Watt. Faserlaser mit einer derartigen Leistung sind dem Fachmann zum Beschriften von Bauteilen an sich bekannt.

Nach der Herstellung der Temperaturmessfläche 38 kann der elektrische Steckverbinder 10 in anschließenden Verarbeitungsschritten als Schüttware weiterverarbeitet werden. Zur Herstellung einer Lötverbindung zwischen dem elektrischen Steckverbinder 10 und dem Koaxialkabel 30 kann dann zu einem späteren Zeitpunkt ein Endabschnitt des Koaxialkabels 30 in den Kabelanschlussabschnitt 22 eingesetzt werden, wobei der Endabschnitt des Koaxialkabels 30 das Lotformteil 26 umgibt. Anschließend wird der Kabelanschlussabschnitt 22 mittels einer Induktionsspule 44 so weit erwärmt, dass das Lotformteil 26 schmilzt und sowohl den Kabelanschlussabschnitt 22 als auch den Außenleiter 34 benetzt. Die Induktionsspule 44 wird von einem Energieversorgungsgerät in Form eines Hochfrequenzgenerators 46 mit Energie versorgt, der von einer Steuereinheit 48 in Abhängigkeit von der Temperatur der Temperaturmessfläche 38 geregelt wird. Die Temperatur der Temperaturmessfläche 38 wird durch berührungsloses Erfassen von Wärmestrahlung ermittelt, die von der Temperaturmessfläche 38 emittiert wird. Zum Erfassen der Wärmestrahlung kommt ein Pyrometer 50 zum Einsatz, dessen Ausgang an die Steuereinheit 48 angeschlossen ist.

Mittels der Steuereinheit 48 wird die Energieversorgung der Induktionsspule 44 derart geregelt, dass der Kabelanschlussabschnitt 22 mittels der Induktionsspule 44 so lange erwärmt wird, bis die vom Pyrometer erfasste Temperatur der Temperaturmessfläche 38 eine vorgegebene Solltemperatur erreicht. Die Solltemperatur wird derart gewählt, dass das Lotformteil 26 schmilzt, dass aber das Koaxialkabel 30 und der elektrische Steckverbinder 10 nicht beschädigt werden.

Da die Temperaturmessfläche 38 aufgrund der in einem vorhergehenden Verfahrensschritt erfolgten Beaufschlagung mit Laserstrahlung 40 einen hohen Emissionsgrad für Wärmestrahlung aufweist, kann die Temperatur der Temperaturmessfläche 38 prozesssicher erfasst werden, so dass der eigentliche Lötprozess in Abhängigkeit von der erfassten Temperatur innerhalb sehr kurzer Zeit durchgeführt werden kann.

## Patentansprüche

1. Verfahren zum Herstellen einer Lötverbindung zwischen mindestens zwei Bauteilen (10, 30), bei dem die Bauteile (10, 30) zum Schmelzen eines Lotes (26) in einem Lötbereich (24) erwärmt werden, wobei die Erwärmung des Lötbereichs (24) und/oder die Zufuhr von Lot zum Lötbereich (24) in Abhängigkeit von der Temperatur erfolgt, die durch berührungsloses Erfassen einer von mindestens einer Temperaturmessfläche (38) eines der Bauteile (10, 30) emittierten Wärmestrahlung ermittelt wird, **dadurch gekennzeichnet, dass** die mindestens eine Temperaturmessfläche (38) zur Erhöhung ihres Emissionsgrads lokal erwärmt wird, wobei die lokale Erwärmung der mindestens einen Temperaturmessfläche (38) eine Veränderung von deren Oberflächenstruktur zur Folge hat.

2. Verfahren nach Anspruch 1, **dadurch gekennzeichnet, dass** die lokale Erwärmung der mindestens einen Temperaturmessfläche (38) in einem zeitlichen Abstand vor dem Beginn der Erfassung der von der Temperaturmessfläche (38) emittierten Wärmestrahlung erfolgt.

3. Verfahren nach Anspruch 1 oder 2, **dadurch gekennzeichnet, dass** die lokale Erwärmung der mindestens einen Temperaturmessfläche (38) erfolgt, bevor die miteinander zu verbindenden Bauteile (10, 30) zusammengefügt werden.

4. Verfahren nach Anspruch 3, **dadurch gekennzeichnet, dass** das die mindestens eine Temperaturmessfläche (38) aufweisende Bauteil (10) vor dem Zusammenfügen der Bauteile (10, 30) als Schüttware weiterverarbeitet wird.

5. Verfahren nach einem der voranstehenden Ansprüche, **dadurch gekennzeichnet, dass** die mindestens eine Temperaturmessfläche (38) zur lokalen Erwärmung mit Laserstrahlung (40) beaufschlagt wird.

6. Verfahren nach Anspruch 5, **dadurch gekennzeichnet, dass** die Leistung der die Laserstrahlung (40) bereitstellenden Laserstrahlungsquelle (42) bis zu 20 Watt beträgt.

7. Verfahren nach Anspruch 5 oder 6, **dadurch gekennzeichnet, dass** die mindestens eine Temperaturmessfläche (38) bis zu 5 Sekunden mit Laserstrahlung (40) beaufschlagt wird.

8. Verfahren nach Anspruch 5, 6 oder 7, **dadurch gekennzeichnet, dass** die die Laserstrahlung (40) bereitstellende Laserstrahlungsquelle (42) ein Festkörperlaser, insbesondere ein Faserlaser ist.

9. Verfahren nach einem der voranstehenden Ansprüche, **dadurch gekennzeichnet, dass** die Erwärmung des Lötbereichs (24) mittels einer Induktionsspule (44) erfolgt, die an ein Energieversorgungsgerät (46) angeschlossen ist, das in Abhängigkeit von der Temperatur der mindestens einen Temperaturmessfläche (38) steuerbar ist.

10. Verfahren nach einem der voranstehenden Ansprüche, **dadurch gekennzeichnet, dass** die miteinander zu verbindenden Bauteile ein elektrischer Steckverbinder (10) und ein elektrisches Kabel (30) sind.

11. Elektrischer Steckverbinder zum Verlöten mit einem Koaxialkabel, wobei der Steckverbinder (10) einen Lötbereich (24) aufweist zum Herstellen einer Lötverbindung mit dem Außenleiter (34) des Koaxialkabels (30), gemäß dem Verfahren nach Anspruch 1, **dadurch gekennzeichnet, dass** der Steckverbinder (10) für eine berührungslose Temperaturerfassung mindestens eine Temperaturmessfläche (38) mit einer durch lokale Wärmebehandlung veränderten Oberflächenstruktur aufweist.

12. Elektrischer Steckverbinder nach Anspruch 11, **dadurch gekennzeichnet, dass** die mindestens eine Temperaturmessfläche (38) oxidiert ist.

13. Elektrischer Steckverbinder nach Anspruch 11 oder 12, **dadurch gekennzeichnet, dass** der Steckverbinder (10) einen Kabelanschlussabschnitt (22) aufweist zur Aufnahme eines Endabschnitts des Koaxialkabels (30), wobei der Kabelanschlussabschnitt (22) eine galvanische Beschichtung trägt, die im Bereich der mindestens einen Temperaturmessfläche (38) abgetragen ist.

14. Verwendung eines elektrischen Steckverbinders nach Anspruch 11, 12 oder 13 im Mobilfunkbereich.

## Claims

1. Method for producing a soldered connection between at least two components (10, 30), in which method the components (10, 30) are heated for melting a solder (26) in a soldering area (24), wherein the heating of the soldering area (24) and/or the supply of solder to the soldering area (24) is realized depending on the temperature which is determined by non-contact detection of heat radiation emitted from at least one temperature measurement zone (38) of one of the components (10, 30), **characterized in that** the at least one temperature measurement zone (38) is locally heated for increasing its emissivity, wherein the local heating of the at least one temperature measurement zone (38) results in a change in the surface structure thereof.

2. Method in accordance with claim 1, **characterized in that** the local heating of the at least one temperature measurement zone (38) is realized at a temporal distance before the start of the detection of the heat radiation emitted from the temperature measurement zone (38).

3. Method in accordance with claim 1 or 2, **characterized in that** the local heating of the at least one temperature measurement zone (38) is realized before the components (10, 30) that are to be connected together are placed together.

4. Method in accordance with claim 3, **characterized in that** the component (10) comprising the at least one temperature measurement zone (38) is further processed as bulk material before the components (10, 30) are placed together.

5. Method in accordance with any one of the preceding claims, **characterized in that** the at least one temperature measurement zone (38) has laser radiation applied thereto for local heating thereof.

6. Method in accordance with claim 5, **characterized in that** the power of the laser radiation source (42) providing the laser radiation (40) is up to 20 watts.

7. Method in accordance with claim 5 or 6, **characterized in that** the at least one temperature measurement zone (38) has applied thereto laser radiation (40) for a time period of up to 5 seconds.

8. Method in accordance with claim 5, 6 or 7, **characterized in that** the laser radiation source (42) providing the laser radiation (40) is a solid state laser, particularly a fibre laser.

9. Method in accordance with any one of the preceding claims, **characterized in that** the heating of the soldering area (24) is realized by way of an induction coil (44) which is connected to an energy supply device (46) that is controllable depending on the temperature of the at least one temperature measurement zone (38).

10. Method in accordance with any one of the preceding claims, **characterized in that** the components to be connected together are an electrical connector (10) and an electrical cable (30).

11. Electrical connector for soldering together with a coaxial cable, wherein the connector (10) has a soldering area (24) for producing a soldered connection with the outer conductor (34) of the coaxial cable (30) in accordance with the method of claim 1, **characterized in that** the connector (10) comprises at least one temperature measurement zone (38) having a surface structure altered by local heat treatment for non-contact temperature detection.

12. Electrical connector in accordance with claim 11, **characterized in that** the at least one temperature measurement zone (38) is oxidized.

13. Electrical connector in accordance with claim 11 or 12, **characterized in that** the connector (10) comprises a cable connecting section (22) for receiving an end section of the coaxial cable (30), wherein the cable connecting section (22) has a galvanic coating which is ablated in the area of the at least one temperature measurement zone (38).

14. Use of an electrical connector in accordance with claim 11, 12 or 13 in the field of mobile radio communications.

## Revendications

1. Procédé pour obtenir une liaison brasée entre au moins deux pièces (10, 30), selon lequel les pièces (10, 30) sont chauffées pour faire fondre un métal d'apport de brasage (26) dans une zone de brasage (24), dans lequel le chauffage de la zone de brasage (24) et/ou l'amenée du métal d'apport de brasage à la zone de brasage (24) s'effectuent en fonction de la température qui est déterminée par détection sans contact d'un rayonnement thermique émis par au moins une surface de mesure de température (38) d'une des pièces (10, 30), **caractérisé en ce que** la au moins une surface de mesure de température (38) est chauffée pour augmenter son degré d'émission, dans lequel le chauffage local de la au moins une surface de mesure de température (38) entraîne une modification de la structure superficielle de ladite surface.

2. Procédé selon la revendication 1, **caractérisé en ce que** le chauffage local de la au moins une surface de mesure de température (38) s'effectue dans un intervalle de temps précédant le début de la détection du rayonnement thermique émis par la surface de mesure de température (38).

3. Procédé selon la revendication 1 ou 2, **caractérisé en ce que** le chauffage local de la au moins une surface de mesure de température (38) s'effectue avant que les pièces (10, 30) à relier l'une à l'autre soient réunies.

4. Procédé selon la revendication 3, **caractérisé en ce que** la pièce (10) présentant la au moins une surface de mesure de température (38) est finie en tant que finition brute avant de réunir les pièces (10, 30).

5. Procédé selon l'une quelconque des revendications précédentes, **caractérisé en ce que** la au moins une surface de mesure de température (38), pour son chauffage local, est soumise à l'effet d'un rayonnement laser (40).

6. Procédé selon la revendication 5, **caractérisé en ce que** la puissance de la source de rayonnement laser (42) fournissant le rayonnement laser (40) atteint jusqu'à 20 Watt.

7. Procédé selon la revendication 5 ou 6, **caractérisé en ce que** la au moins une surface de mesure de température (38) est soumise à l'effet du rayonnement laser (40) pendant une durée allant jusqu'à 5 secondes.

8. Procédé selon la revendication 5, 6 ou 7, **caractérisé en ce que** la source de rayonnement laser (42) fournissant le rayonnement laser (40) est un laser à solide, en particulier un laser à fibre.

9. Procédé selon l'une quelconque des revendications précédentes, **caractérisé en ce que** le chauffage de la zone de brasage (24) s'effectue au moyen d'une bobine d'induction (44), qui est raccordée à un appareil d'alimentation en énergie (46), qui peut être commandé en fonction de la température de la au moins une surface de mesure de température (38).

10. Procédé selon l'une quelconque des revendications précédentes, **caractérisé en ce que** les pièces à relier l'une à l'autre sont un connecteur électrique (10) et un câble électrique (30).

11. Connecteur électrique destiné à être brasé avec un câble coaxial, dans lequel le connecteur (10) présente une zone de brasage (24) pour l'obtention d'une liaison brasée avec le conducteur extérieur (34) du câble coaxial (30), selon le procédé selon la revendication 1, **caractérisé en ce que** le connecteur (10), pour une détection de température sans contact, présente au moins une surface de mesure de température (38) pourvue d'une structure superficielle modifiée par un traitement thermique local.

12. Connecteur électrique selon la revendication 11, **caractérisé en ce que** la au moins une surface de mesure de température (38) est oxydée.

13. Connecteur électrique selon la revendication 11 ou 12, **caractérisé en ce que** le connecteur (10) présente une partie de raccordement au câble (22) destinée à loger une partie d'extrémité du câble coaxial (30), dans lequel la partie de raccordement au câble (22) porte un revêtement galvanique, qui est enlevé dans la zone de la au moins une surface de mesure de température (38).

14. Utilisation d'un connecteur électrique selon la revendication 11, 12 ou 13 dans le domaine de la téléphonie mobile.
